Europäisches Patentamt

(19) European Patent Office

Office européen des brevets

(11) Publication number: **0 017 489**

**A1**

(12) # EUROPEAN PATENT APPLICATION

(21) Application number: **80301068.5**

(22) Date of filing: **03.04.80**

(51) Int. Cl.³: **B 65 G 47/91**

(30) Priority: **04.04.79 US 26931**

(43) Date of publication of application:
**15.10.80 Bulletin 80/21**

(84) Designated Contracting States:
**DE FR GB IT**

(71) Applicant: SERVICE (ENGINEERS) LIMITED
Leek New Road
Cobridge Stoke-on-Trent, ST6 2LB(GB)

(72) Inventor: Ryckman, George Edward
49314 North Meadowbrook Circle
East Liverpool Ohio 43920(US)

(72) Inventor: Timbey, William
27 Marsh Avenue
Newchapel Stoke-on-Trent(GB)

(72) Inventor: Meadows, Frank William
23 Percival Drive
Stockton Brook Stoke-on-Trent(GB)

(74) Representative: Wallbank, Roger Wickham
BARKER, BRETTELL & DUNCAN 138 Hagley Road
Edgbaston Birmingham, B16 9PW(GB)

(54) Automatic apparatus for handling ceramic ware.

(57) Automatic apparatus for handling ceramic ware comprises a conveyor with a belt (17) driven by a motor (29). Ware is carried by the conveyor between adjustable guides (36) which, if necessary, urge in onto the centre-line of the belt. Each guide engages the actuating member (58) of a switch operated in response to ware engaging the guide. When both switches have been operated the motor stops and the ware is held at a pick-up station. A vacuum cup (93) is lowered by a pneumatic cylinder (101) to engage the ware and then pick it up. The cylinder and vacuum cup are then traversed, as by a cam (68). The cylinder operates to lower the vacuum cup and release the ware, and the parts return to their initial positions. Cyclic operation continues automatically.

EP 0 017 489 A1

FIG.2

1

<u>AUTOMATIC APPARATUS FOR HANDLING CERAMIC WARE</u>

This invention relates to automatic apparatus
for handling ceramic ware, such as dinnerware and
the like, in the process of manufacturing the same
and specifically in moving the ceramic ware from
one location to another without manual assistance
or guidance. The apparatus is primarily intended
for use with ceramic ware that has been fired at
least once, though it may be of use with ware that
has been shaped from clay and merely dried, that
is so-called green ware.

It is known to provide apparatus for this
purpose comprising a conveyor with carrying means
such as a moving belt for carrying ceramic ware,
and with drive means to move the ware along the
conveyor. Removal of the ware from the conveyor,
however, has been effected manually. Other forms
of apparatus are also known. For example apparatus for use in supplying partly finished dinnerware to a dinnerware-decorating machine, has
comprised tables, which are fixed and/or movable,
from which operators manually remove the articles
of ware and manually position them in or on the
decorating machine for further processing. The
applicants know of no prior patent specifications
which relate to the automation of the handling
steps previously performed manually, that is
feeding, centring, locating, lifting, traversing,
and lowering articles of ceramic ware, and which
incorporate the capabilities of the present inven-
tion.

2

According to the present invention there is provided automatic apparatus for handling ceramic ware, and of the kind comprising a conveyor having carrying means operative to carry ceramic ware and drive means operative to cause the carrying means to move the ware along the conveyor, characterised in that the apparatus also comprises guide means comprising a guide on each side of the path followed by ware moving along the conveyor and inclined relative to the path so that ware moved along the conveyor and engaging the guide means is constrained to move laterally of the conveyor so as to take up a predetermined position on the path and to be carried to a pick-up station, detector means responsive to the presence of ware at the pick-up station and operative to stop the drive means when ware is present at the pick-up station and to re-start the drive means when ware is not present at said station, pick-up means comprising a pick-up head operative to engage and release ware and shifting means operative to raise and lower the pick-up head and to cause the pick-up head to traverse, and control means operative when ware is present at the pick-up station to cause the shifting means to lower the pick-up head from an initial position onto the ware, to cause the pick-up head to engage the ware, to cause the shifting means to raise the head with the ware traverse it away from the pick-up station and lower it, to cause the pick-up head to release the ware and to cause the shifting means to return the head to its initial position.

Embodiments of the invention will now be described, by way of example, with reference to the accompanying drawings, in which:-

Figure 1 is a schematic diagram of a first form of automatic apparatus embodying the present invention, showing it in relation to a decorating machine to which it transfers articles of ware individually;

Figure 2 is a side elevation of the automatic apparatus shown in Figure 1, with solid lines showing the pick-up head in one location and broken lines showing the pick-up head in a second position above a predetermined location on the conveyor of the device;

Figure 3 is an enlarged vertical section on line 3-3 of Figure 2;

Figure 4 is an enlarged top plan view with parts broken away illustrating a portion of the automatic apparatus seen in Figure 2 of the drawings;

Figure 5 is an enlarged detail of a portion of the automatic apparatus seen in Figure 4 of the drawings and viewed in elevation;

Figure 6 is an enlarged detail of the mechanism in the pick-up head portion of the device seen in Figure 2 of the drawings;

Figure 7 is a schematic diagram illustrating the pressure-vacuum lines and controls of the automatic apparatus shown in the preceding Figures;

4

Figure 8 is a diagrammatic illustration of the vacuum system utilized in the pick-up head for engagement with the ware;

Figure 9 is a symbolic electrical diagram of the controls and motion-imparting motors of the automatic apparatus;

Figure 10 is a plan view of one end portion of the conveyor of a second form of automatic apparatus embodying the present invention, some parts being broken away;

Figure 11 is a plan view, to a larger scale, of switch-operating means included in Figure 10;

Figure 12 is a section along the line 12-12 of Figure 11;

Figure 13 is a side view of one end portion of the second form of automatic apparatus; and

Figure 14 is an end view of the automatic apparatus as viewed from the left of Figure 13.

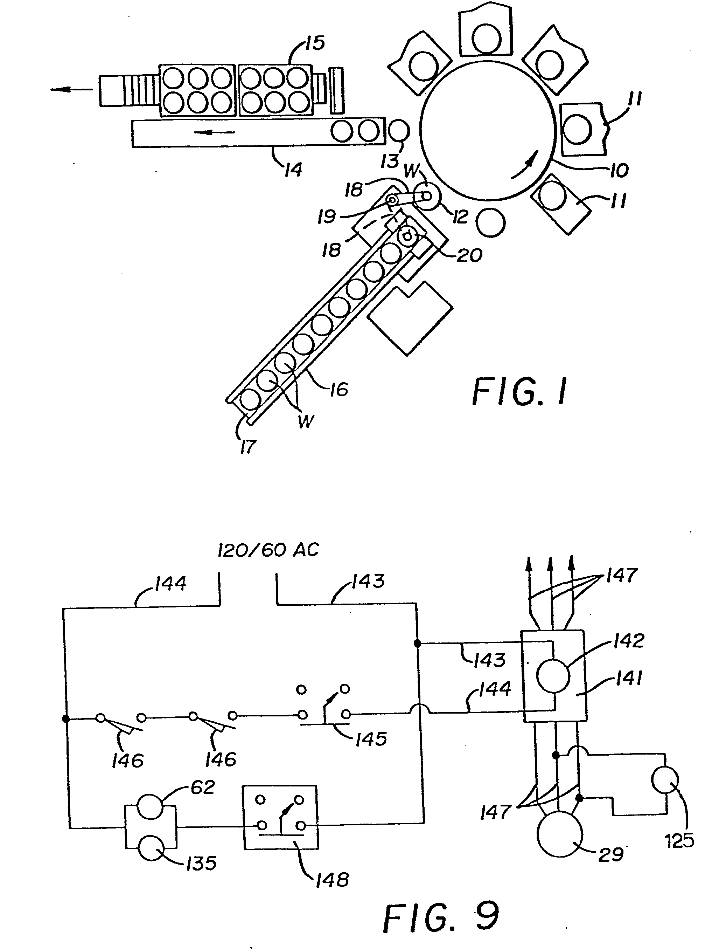

The automatic apparatus for handling ceramic ware, illustrated in Figures 1 to 9 of the accompanying drawings, is shown in a typical dinnerware-manufacturing environment and in particular, as seen in Figure 1, adjacent to a dinnerware-decorating machine 10 which has a plurality of decorating stations 11 positioned in an annular pattern. The ware to be decorated is transferred to the decorating machine at a predetermined location, indicated by the numeral 12, and the machine, as will be understood by those skilled in the art, moves the ware progressively counterclockwise through the several decorating stations 11 to a final station 13 where the machine ejects the decorated ware radially as to a conveyor 14. The ware is manually transferred from the conveyor 14 to carriers 15 which then move the ware to a kiln for further firing as known in the art.

Still referring to Figure 1 of the drawings, it will be seen that the automatic apparatus of the present invention is positioned radially outwardly of the dinnerware-decorating machine 10 and adjacent to the location 12 thereof. The automatic apparatus has a conveyor comprising a supporting structure 16 with a conveyor belt 17 on its uppermost surface, and articles of ware are positioned thereon as indicated by the circles W. The conveyor belt constitutes the carrying means of the conveyor. The ware is usually positioned manually on the conveyor belt. The end of the automatic apparatus adjacent to the dinnerware-decorating machine 10 includes a pick-up device generally indicated at 18, parts of which move both vertically and with an arcuate traversing motion based on its supporting shaft 19 so as to pick up the individual articles of ware from the end of the automatic apparatus where it has been centred and located in a predetermined fixed position as indicated by the numeral 20. From this position the ware is picked up by the pick-up device 18 and moved arcuately and then downwardly to the location 12 of the dinnerware-decorating machine.

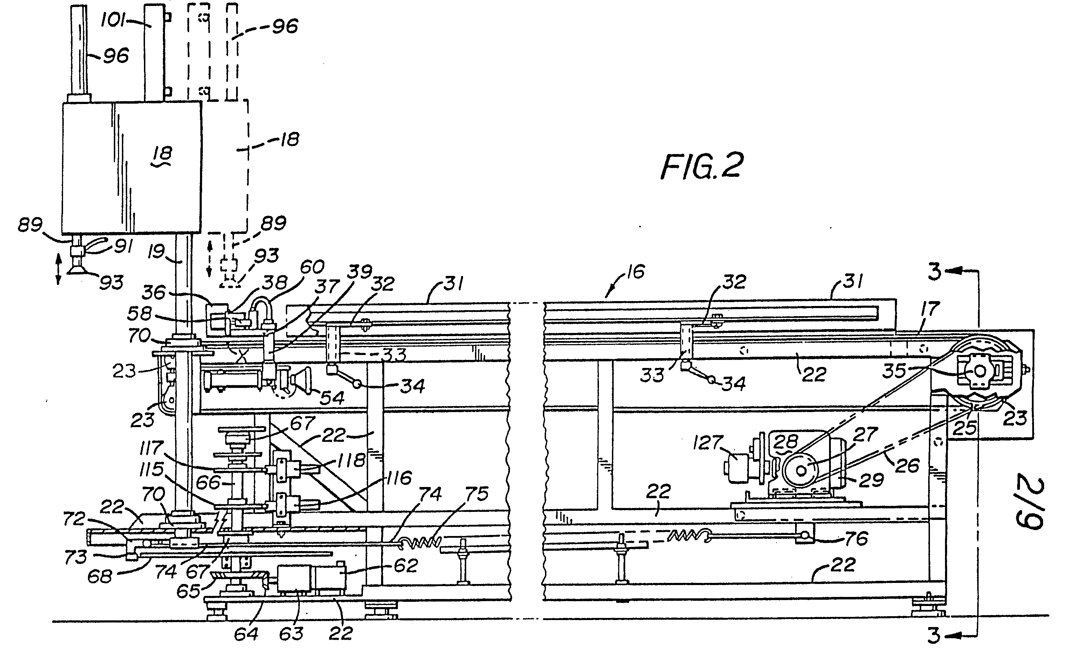

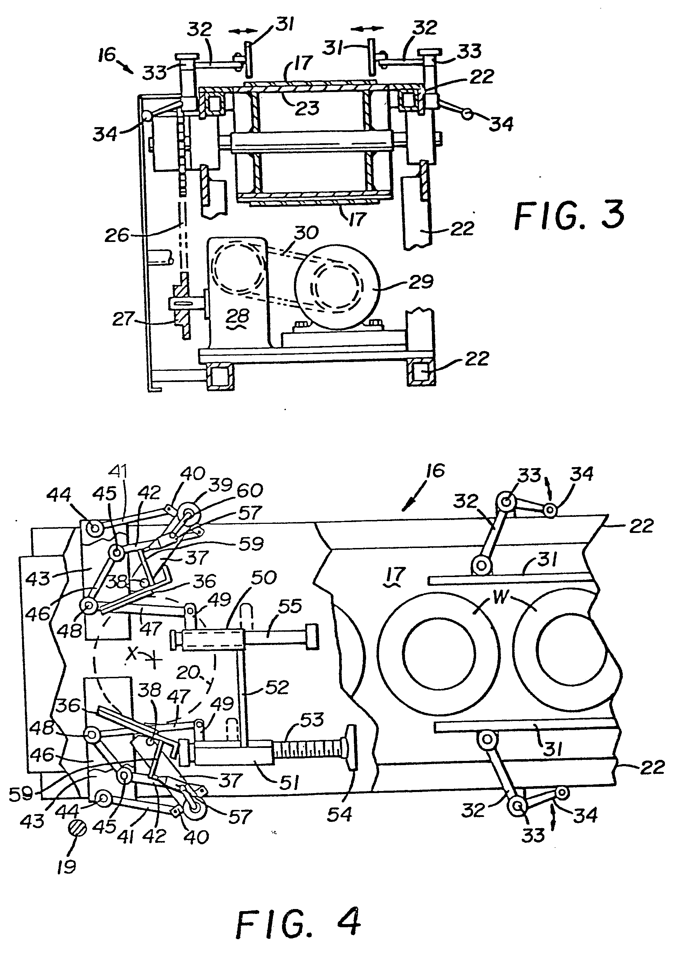

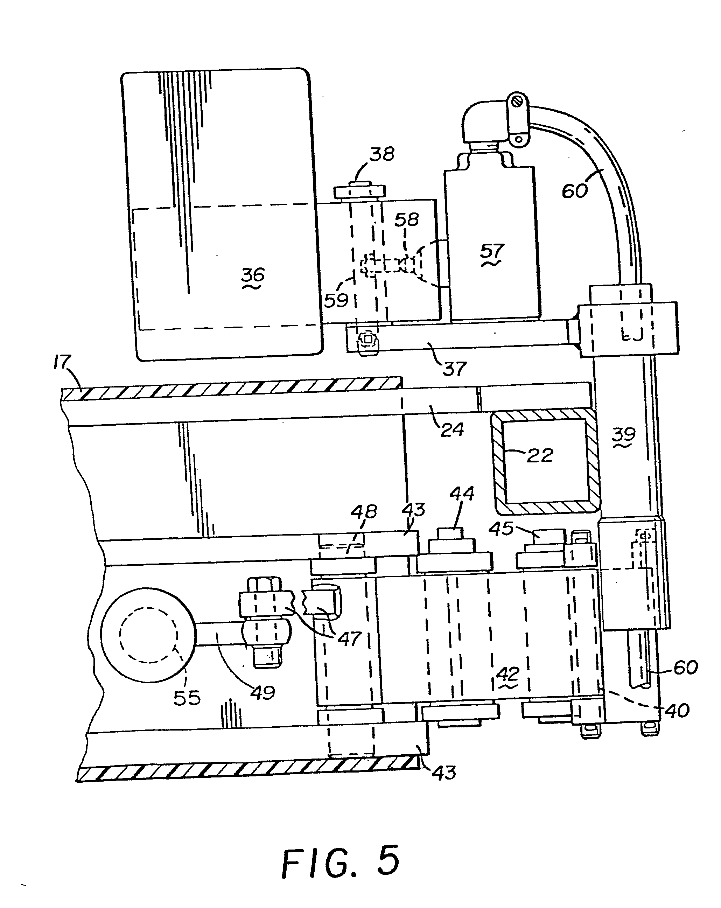

From Figure 2 of the drawings it will be seen that the supporting structure 16 comprises a frame having structural members 22, the uppermost portions of which support a plurality of rollers over which the conveyor belt 17 is trained. At the ends of the conveyor are rollers 23, while at intervals along the upper run of the conveyor are intermediate rollers, one of which, 24, is shown in Figure 5. The arrangement is such that the upper run of the conveyor belt 17 normally travels from right to left as seen in Figure 2 of the drawings so that ware positioned thereon anywhere along its length will move to the left and to the position 20 indicated in Figure 4 in broken lines at the left hand end of the conveyor belt 17. The roller 23 at the right end of the automatic apparatus is provided with a sprocket 25 over which a drive chain 26 is trained. The chain is also trained over a secondary sprocket 27 on a gear reduction box 28 which in turn is driven by an electric motor 29 by way of a belt 30 (see Figure 3). This assembly of motor and chain-drive constitutes drive means for the conveyor belt.

By referring now to Figures 2 and 3 of the drawings, it will be seen that there is a pair of spaced parallel guide rails 31 positioned above and parallel with the longitudinal sides of the conveyor belt 17. These guide rails 31 are mounted in movable relation on the outer ends of several pairs of adjustment arms 32 which are in turn secured at their outer or opposite ends to stub shafts 33 and these are rotatably journalled in brackets on structural members 22 and each is provided with a projecting handle 34 so that relative spacing of the guide rails 31 can be adjusted. The arms can be locked in a preferred position such as for example as seen in Figure 4 of the drawings where the rails 31 are spaced slightly away from the edges of articles of ware W being moved along the conveyor belt 17.

By referring again to Figure 2 of the drawings, it will be seen that the left hand end of the conveyor belt 17 is trained over a pair of rollers 23. A tensioning mechanism at the right hand end of the belt and generally indicated at 35 is provided so that a desired tension can be maintained on the conveyor belt 17.

Those skilled in the art will appreciate that the ware W positioned on the conveyor belt 17 will be moved thereby between the guides 31 as seen in Figures 2 and 4 of the drawings toward the left hand end thereof and that the ware will be generally aligned on the belt and prevented from moving laterally therefrom by the guide rails 31, which are adjustable transversely as described above. The spacing between the guide rails is adjusted in accordance with the width of the particular ware being handled by the automatic apparatus.

Still referring to Figures 2 and 4 of the drawings, it will be seen that when the ware reaches the left hand end of the conveyor belt 17 it engages a pair of oppositely disposed angularly positioned paddles 36 each of which is pivoted on the inner end of an associated carrying arm 37 by means of a pivot 38. The paddles constitute the guides of the guide means referred to above. The opposite end of each of the arms 37 is secured to an associated tubular body member 39 as best seen in Figures 4 and 5 of the drawings. Each of the tubular body members 39 is mounted on a plate 40 which in turn is pivotally secured at each of its vertical edges to a pair of secondary carrying arms 41 and 42 respectively. The other ends of the secondary carrying arms 41 and 42 are pivoted to horizontally disposed support members 43 by pivots 44 and 45 respectively. Each of the secondary carrying arms 42 has an actuating arm 46 attached thereto and each is located at an angle with respect to the longitudinal direction of the corresponding secondary carrying arm 42 to which it is attached as best seen in Figure 4 of the drawings. Each of the actuating arms 46 is in turn pivoted to a pair of motion-imparting arms 47 by pivots 48 and the opposite ends of the motion-imparting arms 47 are pivoted to extentions 49 on a pair of sleeves 50 and 51 respectively which are in turn connected to one another by a rigid link 52. The sleeve 51 is threaded internally and engaged on a rotatable screw 53 which has a disc 54 on one end so that it can be rotated thereby. The sleeve 50 is slidably mounted on a rod 55.

It will thus be seen that the oppositely disposed angularly positioned paddles 36 may be simultaneously moved toward and away from each other by rotating the disc 54 in the appropriate direction so that the oppositely disposed paddles 36 can be appropriately positioned for different diameters of ware moving on the conveyor belt 17 and so that the paddles 36 maintain a constant angular relationship to the longitudinal centre line of the belt 24 and will thus engage the ware and centre it at the predetermined pick-up station. In Figure 4 of the drawings, a cross X marks the centre point location of a piece of circular ware guided to the pick-up station by the paddles 36.

Still referring to Figures 4 and 5 of the drawings, it will be seen that each of the carrying arms 37 has an electrical switch 57 constituting detector means mounted thereon and that its actuating plunger 58 extends laterally therefrom and is positioned for engagement with and is actuated by a switch arm 59 on the associated paddle 36. Electrical conductors 60 lead from each of the switches 57 to and become part of an energizing circuit for the electric motor 29 which drives the conveyor belt 17. The arrangement as hereinafter described is such that the ware moving along the conveyor belt 17 as driven by the motor 29 engages one or the other of the paddles 36 if the ware is off centre with respect to the desired centre point location X heretofore referred to. The motion imparted by the belt 17 causes the article of ware to slide laterally on the smooth surface of the paddle 36 which is inclined to the direction of movement of the conveyor and directs the article of ware toward the desired centre point X and simultaneously moves the switch arm 59 into engagement with the actuating plunger 58 of the switch 57 and thereby causes the switch contacts to close. As described below the switch contacts are in circuit with means controlling the electric motor 29. As the article of ware moves towards a position in which its centre coincides with the desired centre point X of the pick-up station it engages the other one of the pair of paddles 36, and as it moves thereagainst it reaches the position in which its centre is exactly coincident with the centre point X. Operation of the second switch 57 on the other carrying arm 37 causes the magnetic starter control to de-energize the electric motor 29, and the energization of a solenoid air valve which controls a pneumatic brake on the gear box 28 and immediately stops movement of the conveyor belt 17. When this occurs the piece of ware is located on the desired centre point for pick-up and a secondary electric motor 62, shown in Figure 2, is energized. It drives a gear box 63, and in turn the gear box, by way of a pair of engaged bevelled gears 64 and 65, rotates a vertically positioned cam shaft 66 which is positioned in bearings 67 on portions of the supporting structure 16 of the automatic apparatus.

The gear box 63 and the gears 64 and 65 which drive the cam shaft 66 are arranged so that the cam shaft 66 will make one revolution per pick-up cycle of the automatic apparatus; and still referring to Figure 2 it will be seen that a first cam disc 68 is mounted on the cam shaft 66 so that a portion of the disc 68 moves beneath the end of the rotatable shaft 19 which is positioned at one side of the supporting structure 22 and journalled by a pair of vertically spaced bearings 70 thereon. The rotatable shaft 19 carries the pick-up device 18 on its upper end and has a cam follower arm 72 secured to its lower end. A follower 73 on the arm 72 engages the first cam disc 68. A flexible cable 74 is attached to the cam follower arm 72 at one of its ends and at its other end it engages an elongated coil spring 75, the other end of which is attached at 76 to one of the structural members 22. The arrangement is such that the rotation of the first cam disc 68 imparts rotary movement to the rotatable shaft 19 and causes the pick-up device 18 to move in an arc based on the shaft 19 to and from the positions indicated in Figure 1 of the drawings and hereinbefore referred to.

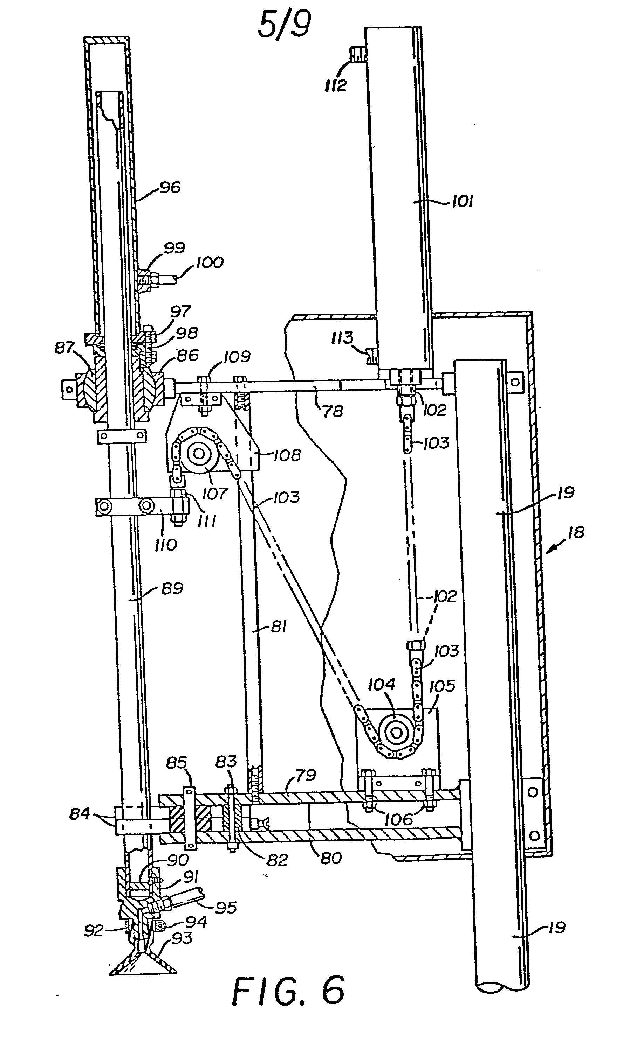

By referring now to Figures 2 and 6 of the drawings, the mechanism comprising the pick-up device 18 may be seen.

In Figure 6 the rotatable shaft 19 supports horizontal frame members 78, 79 and 80 respectively, which extend outwardly from one side of the shaft 19 and are secured thereto. A vertical frame member 81 is positioned between the horizontal frame members 78 and 79 and secured thereto, and a spacer 82 is positioned between the horizontal frame members 79 and 80 and secured thereto as by a fastener 83. A pair of separable arcuate guides 84 is positioned between the horizontal frame members 79 and 80, their free ends extending outwardly to the left as seen in Figure 6 of the drawings; the guides are releasably secured by a fastener 85. The outer end of the horizontal frame member 78 supports a bushing 86, the inner configuration of which describes a part of a sphere and it is positioned around an annular collar 87, the outer surface of which has a matching configuration. A tube 89 of elongated shape is slidably positioned within the annular collar 87 and within the arcuate guides 84 for vertical motion relative thereto. The lower end of the tube 89 is closed by a member 90 and supports a fitting 91 which has a passageway 92 therein. A flexible rubber-like vacuum cup 93 constituting the pick-up head referred to above is positioned on the lower end of the fitting 91 and secured thereto by a clamp 94. The passageway 92 communicates with the interior of the vacuum cup 93 and with a flexible hose 95 which extends from the side of the fitting 91. The upper end of the tube 89 is open. The upper portion of the tube 89 is positioned within a housing 96, the lower portion of which is provided with a closure 97 incorporating a sealing gland 98, the closure 97 being secured to the bushing 86. A threaded opening 99 in the housing 96 communicates with a flexible tube 100. The area within the housing 96 and within the tube 89 forms an air spring. Air is supplied to the air spring by way of the tube 100 which also communicates with a pressure regulator, a gauge, a reservoir, and an air source, as hereinafter described. The purpose of the air spring is to urge the tube 89 downwardly so as to bring the vacuum cup 93 on its lower end into engagement with a piece of ceramic ware to be picked up, held thereby, and moved to a spaced location, lowered and released all with a gentle series of motions, involving no shocks, to ensure that the ware handled by the pick-up head is neither damaged nor marked.

A pneumatic piston-and-cylinder unit is positioned on the horizontal frame member 78, the cylinder being indicated by the numeral 101 with the piston rod 102 extending out of the lower end thereof. The piston rod extends alongside the horizontal frame member 78 and is attached to one end of a flexible chain 103. The chain is arranged in a path extending downwardly on the axial centre line of the cylinder 101 to a sprocket 104 mounted on a bracket 105 which in turn is attached to the horizontal frame member 79 by fasteners 106. The flexible chain 103 then extends upwardly at an inclination to the vertical and is trained over a second sprocket 107 on a second bracket 108 which is attached to the horizontal frame member 78 by a fastener 109. The other end of the flexible chain 103 is attached to a clamp 110 by a fastener 111. The clamp 110 is tightly affixed to the tube 89 approximately mid-way between the ends thereof. Fittings 112 and 113 on the pneumatic cylinder 101 communicate with a four-way air valve 16, shown in Figure 2, which in turn is supplied with air pressure from an air pressure source by way of a regulator as hereinafter more fully described. In Figure 2 the pick-up device 18 is shown in the same position as it is in Figure 6.

In Figure 1 of the drawings, solid lines illustrate the position of the pick-up device 18 when it is handling an article of ware at to the location 12, and it will be observed that this same position is illustrated in Figure 2 of the drawings in solid lines, while broken lines in Figure 2 of the drawings illustrate the position

14

of the pick-up device which corresponds to the position of the pick-up device 18 shown in broken lines in Figure 1.

In Figure 2 of the drawings, the broken-line representation of the pick-up device 18 includes the tube 89 with the vacuum cup 93 on the lower end thereof and it will be observed that the vertical centre line of the tube 89 and the vacuum cup 93 is directly above the centre point location X of the pick-up station on which the ware is positioned for pick-up.

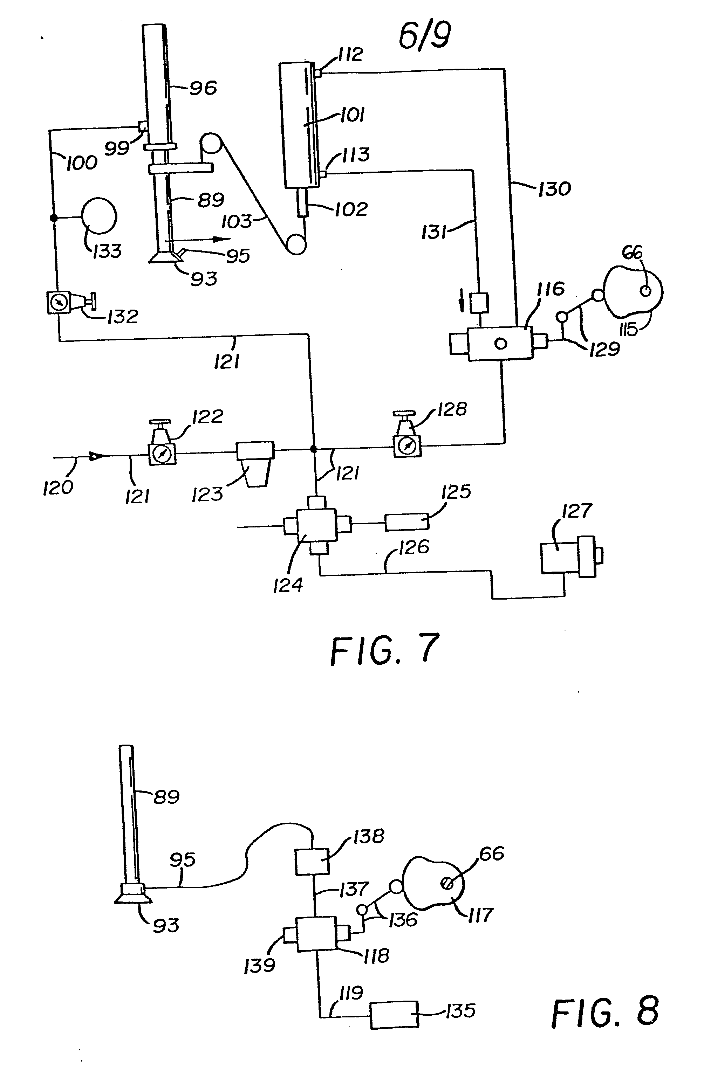

By again referring to Figure 2 of the drawings, it will be seen that in addition to the first cam disc 68 on the cam shaft 66 there is a second cam disc 115 which is arranged to control a four-way air valve 116, which is hereinafter described and further disclosed in Figure 7 of the drawings. Valve 116 controls the flow of air to and from the cylinder 101 and the vertical motion of the tube 89 by way of the flexible chain 103. The cam shaft 66 has a third cam disc 117 thereon which is arranged to control a three-way vacuum valve 118 as hereinafter described and illustrated in Figure 8 of the drawings. The third cam disc 117 controls a vacuum supply line 119 which communicates with the flexible hose 95 which in turn communicates with the vacuum cup 93 on the lower end of the tube 89 as heretofore described.

By referring again to Figure 6 of the drawings, it will be seen that the arrangement of the means for supporting and imparting motion to the tube 89 also makes provision for the accidental dislocation from its normal position of the pick-up head 18. Specifically the part-spherical bushing 86 and the annular collar 87 of complementary shape make it possible for the tube 89 to be moved from its normal vertical position, as would occur if it was accidentally struck by an operator or by displaced ware, etc. The tube 89 is normally held in the vertical position illustrated in Figure 6 by the separable arcuate guides 84 and in the event of lateral motion being imparted to the tube 89, as for example at or near its lower end, the arcuate guides 84 will part and permit the tube to swing in an arc based on the centre of the annular collar 87 and the bushing 86 which continues to hold it. The arrangement is therefore such that the tube 89 and its vacuum cup fitting will not be damaged by accidental motion imparted to the same.

Replacement of the tube 89 between the arcuate guides 84 will realign the tube on its normal vertical axis.

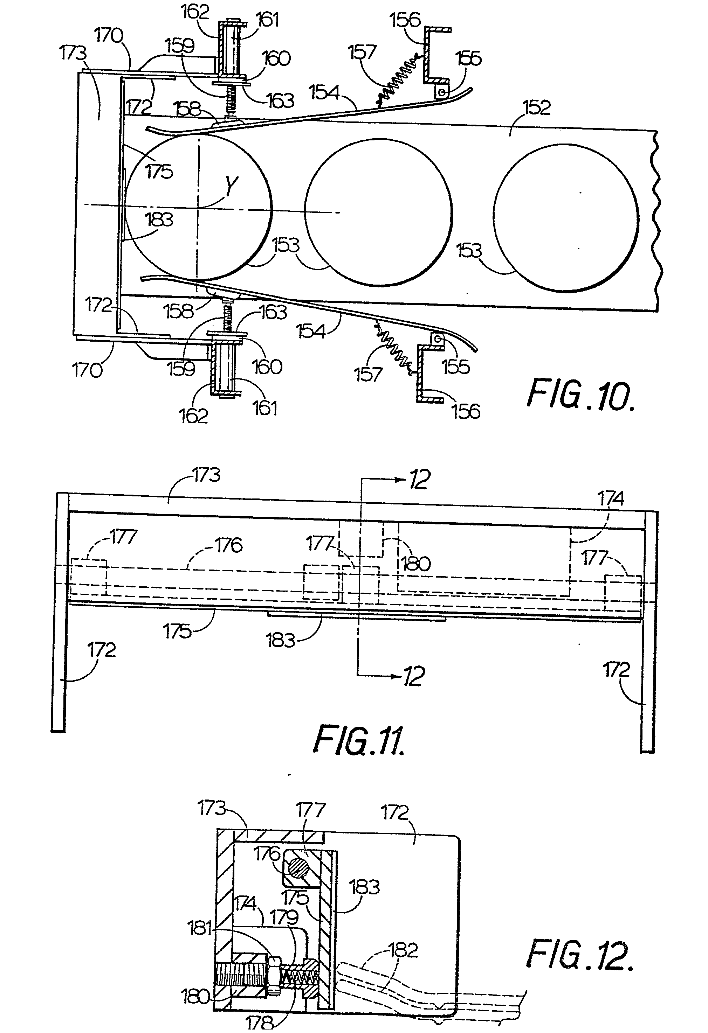

Figure 7 of the drawings is a symbolic diagram illustrating the means that provides the vertical motion to the tube 89. An air supply source is indicated by the numeral 120 and is in communication with an air supply line 121. A pressure regulator 122 controls the line 121 and a lubricant feeder 123 also communicates therewith. The line 121 branches to communicate with a second three-way valve 124 which is arranged to be actuated by a solenoid 125, and an air supply line 126 extends from the second three-way valve 124 to a pneumatic brake 127 which is mounted on the gear box 28 which forms part of the drive means of the conveyor belt 17 heretofore referred to. The solenoid 125 is responsive in action to the circuits energizing and de-energizing the electric motor 29 as may be seen in Figure 9 of the drawings and hereinafter described.

Still referring to Figure 7 it will be seen that a second pressure regulator 128 is incorporated with an extension of the air supply line 121 which extends to the four-way air valve 116, the valve 116 being actuated by a cam follower and lever 129 which is responsive in action to the rotation of the second cam disc 115. Air supply lines 130 and 131 extend from the four-way air valve to the fittings 113 and 112 of the pneumatic cylinder 101 which as hereinbefore described is part of the pick-up device 18. Another branch of the air supply line 121 extends to a third regulator 132 and communicates with a reservoir 133 and with the threaded opening 99 by way of the flexible tube 100. The opening 99 communicates with the interior of the housing 96 which forms the air spring which controls the motion of the tube 89 imparted thereto by the pneumatic piston and cylinder assembly 101.

The air supply source 120 can be any conventional motor driven air compressor and a typical actuating pressure is 45 PSI (3.16 kg/cm$^2$). The regulators 122, 128 and 132 are manually adjustable and a suitable working pressure has been found to be 40 PSI (2.81 kg/cm$^2$).

17

Figure 8 of the drawings is a diagrammatic drawing of the vacuum system used in connection with the vacuum cup 93. In Figure 8 a motor-operated vacuum pump 135 communicates with the vacuum supply line 119 which in turn is controlled by the three-way vacuum valve 118. The valve 118 is actuated by the third cam disc 117 on the cam shaft 66 as hereinbefore described, and the motion of the third cam disc 117 is conveyed to the three-way valve 118 by a link and lever 136. One port of the three-way vacuum valve 118 communicates, by way of a vacuum line 137, a filter 138 and the flexible hose 95, with the vacuum cup 93. A vent port of the three-way vacuum valve 118 is indicated by the numeral 139.

It will thus be seen that the several desired motions of the pick-up device 18 are controlled by the cam shaft 66 and the several cam discs thereon and it will be apparent to those skilled in the art that while driving motor 62 and gear box 63 are shown herein and described as providing the one revolution per pick-up and deposit cycle of the automatic loader, it is possible to drive the cam shaft 66 from a remote source, as for example from another automatic apparatus of a similar kind, so long as one revolution per cycle is imparted to the cam shaft 66.

Figure 9 of the drawings is a symbolic diagram of the electrical circuits. The electric motor 29 is provided with a three-conductor connection with magnetic starter 141. The control coil 142 of which is energized by a separate power source by way of conductors 143 and 144. The power supply may comprise 120 volt 60 cycle AC current. The conductor 144 has a manual off/on switch 145 therein and a pair of solenoid-controlled switches 146 therein, which switches 46 are responsive in operation to the switches 57 which as hereinbefore described herein are mounted on the carrying arms 37 and actuated by extensions of the paddles 36, the arrangement being such that upon actuation of both the switches 57 by the centring of the ware on the device, the switches 146 close and actuate the control coil 142 in the magnetic starter 141 which interrupts the circuit defined by conductors 147 that normally energize the belt driving motor 29. Simultaneously the solenoid valve 125 which is electrically connected with two of the conductors 147 is de-energized and operates the pneumatic brake 127 so as to stop the motion of the conveyor belt 17 as hereinbefore described.

The motor of the vacuum pump 135 and the motor 62 for the cam shaft are also connected with the conductors 143 and 144 and a manual off/on control switch 148 is provided.

It will thus be seen that an automatic apparatus for the rapid and safe handling of ceramic ware such as partially completed dishes has been disclosed above, which apparatus uniquely provides a convenient location on which the partially completed ceramic ware can be positioned and moved automatically to a predetermined centre point location at a pick-up station, centred thereon and sequentially lifted, moved in an arcuate motion and lowered to a desired remote location and gently released. The automatic apparatus provides flexibility by being readily adjustable to the handling of different sizes of ceramic ware and ensures the safe handling of the ware through the novel provision of vacuum pick-up and release mechanism which is actuated by a pneumatic piston-and-cylinder unit which is opposed and thereby cushioned by an air spring formed integrally in the operating parts of the pick-up mechanism.

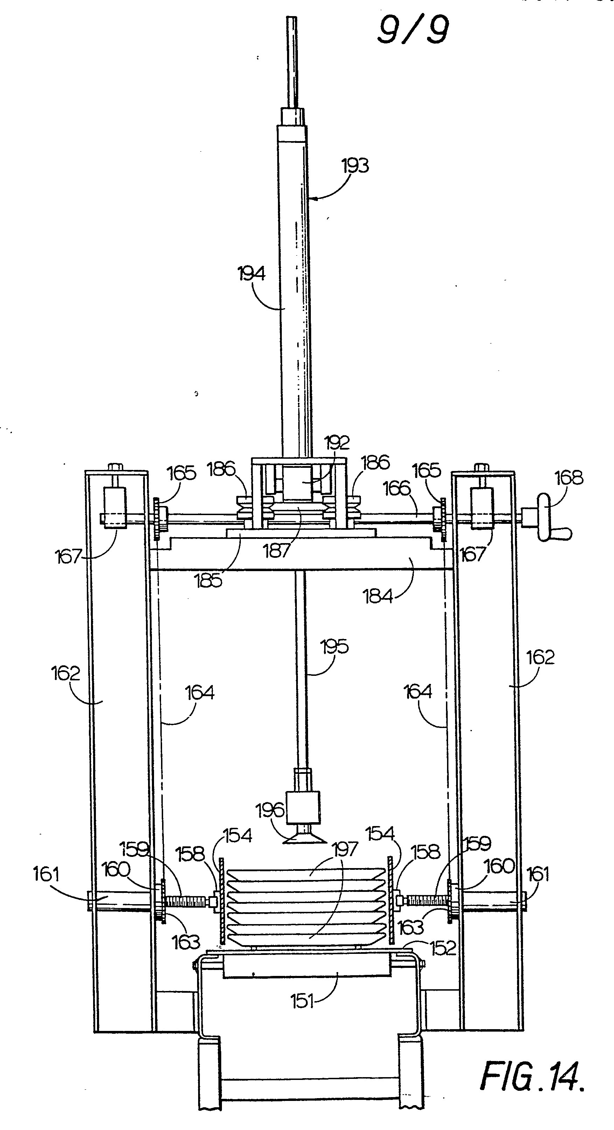

The apparatus shown in Figures 10 to 14 is in many ways similar to that shown in Figures 1 to 9 but does differ from it in some significant respects. The apparatus comprises a supporting structure 150 with rollers, one of which is shown at 151 in Figure 14, mounted on it. An endless belt 152 is supported by the rollers. The rollers and belt constitute a conveyor. The belt is driven by an electric motor and can be stopped by a brake, neither the motor nor the brake being shown as they are of conventional form.

In use the conveyor carries ceramic ware 153, such as once-fired plates, towards the left hand end of the conveyor as seen in Figure 10. As each plate approaches that end it passes between a pair of guides 154. The guides serve to urge laterally of the belt plates that are not symmetrically disposed on the longitudinal centre-line of the belt to positions in which they are symmetrically disposed, that is in which their centres are above that centre-line. The guides are adjustably mounted so as to enable them to be used with ware of different widths or diameters. Each guide 154 comprises an upright plate pivoted, by means of a pivot 155 near one end of the guide, to an adjacent upright 156 constituting part of the supporting structure. A tension spring 157, anchored to the upright, is attached to the guide and urges it outwards against a stop 158. Each of the stops 158 is located by an associated screw 159 which is restrained against rotation and engages a nut 160. Each nut 160 is secured to an associated tubular spindle 161 mounted for rotation on an associated upright 162 which also forms part of the supporting structure. Chain-wheels 163 on the nuts 160 are connected by driving chains 164 to chain-wheels 165 keyed to a horizontal spindle 166. The spindle is mounted in adjustable bearings 167 supported on the uprights 162 and can be rotated by a hand-wheel 168. Rotation of the hand-wheel thus causes rotation of the nuts 160, the arrangement being such that the guides 154 are moved towards and away from each other but remain equidistant from the longitudinal centre-line of the conveyor.

Parallel side-plates 170 project longitudinally of the conveyor from the upright 162 and are formed with horizontal slots 171. Arms 172 are bolted against the inside faces of the side-plates, the bolts (not shown) extending through the slots 171 so that the arms can be adjusted lengthwise of the conveyor. A bracket 173 extends between those ends of the arms further from the upright 162 and carries a detector in the form of a proximity switch 174. An operating plate 175, constituting a displaceable member, also extends between the arms 172 but unlike the bracket 173 the operating plate is movable relative to the arms, being pivoted to the arms by means of a pivot rod 176 which passes through holes in lugs 177 near the top edge of the plate. The lower part of the operating plate 175 is urged away from the bracket 173 by a compression spring 178 which can be adjusted axially.

The spring enters a blind in a screw 179; the screw engages a tapped sleeve 180 on the bracket and is secured against inadvertent rotation by a lock-nut 181. The arrangement is such that when the operating plate 175 is free for pivotal movement it normally lies at an angle inclined to the vertical. However, when ware, such as that indicated by broken lines 182, is carried by the conveyor into engagement with the operating plate, or into engagement with a pad 183 on the operating plate, the plate is pushed by the ware into a vertical position, as shown in Figures 11 and 12, against the action of the spring 178, and is prevented from further movement by the screw 179 which thus serves as a stop. As the operating plate 175 approaches the vertical it operates the proximity switch 174 which is so connected as to cause the motor driving the conveyor to stop and the brake to be applied.

The apparatus is so adjusted that, when the conveyor is stopped in response to ware moving the operating plate to its vertical position, such ware has been brought by the guides 154 to a pick-up station position such that its centre is above the centre-line of the belt 152 and is a predetermined distance from the bracket 173. The position of the centre is indicated at Y in Figure 10. It will be appreciated from the foregoing description that, if the apparatus is to be used with ware of a different length or diameter, such ware can also be brought to a halt at the pick-up station with its centre at Y. To achieve this the positions of the guides 154 are adjusted as described above and the arms 172 are adjusted to move the bracket, and the stop with it, nearer to or further from the point Y as may be required. In an alternative arrangement (not illustrated) the ware is brought onto the centre-line of the conveyor belt some distance in front of the operating plate. In that case the guides are preferably provided with mutually parallel portions extending lengthwise of the conveyor and operative to retain the ware on the centre-line of the conveyor.

A pick-up device is mounted on the uprights 156 and 162 at some distance above the conveyor and the guides. The uprights 162 are interconnected by a transverse member 184 which supports an intermediate portion of a base plate 185, one end portion of which is supported by the uprights 156. Laterally spaced pairs of guide rollers 186 are mounted on the base plate 185 so as to be freely rotatable about vertical axes. The rollers are formed with V-shaped peripheral grooves. A travelling beam 187 is supported between the rollers 186; parallel side edges of the beam are of V-shaped cross-section and project laterally into the grooves in the rollers. The beam is thus free to move longitudinally but can move in no other manner. Longitudinal movement of the beam 187 is effected by a pneumatic piston-and-cylinder unit 188 constituting traversing means. Near its centre the cylinder 189 of the unit is mounted for pivotal movement about a horizontal axis 190, being supported between upstanding lugs 191 on the base plate 185. The piston rod of the unit is pivotally connected to an upstanding lug 192 on the travelling beam 187, near one end of the beam.

Between the lug 192 and the adjacent end of the beam 187 there is mounted a pick-up head comprising a second pneumatic piston-and-cylinder unit 193 constituting lift means. The axis of the unit 193 is vertical. The lower end of the cylinder 194 of the unit is fixed to the beam, while the piston rod 195 thereof extends downwards through a hole in the beam. A vacuum cup 196 constituting a pick-up head, and similar to the vacuum cup 93, is mounted on the lower end of the piston rod. The piston rod extends above the piston and projects from the upper end of the cylinder.

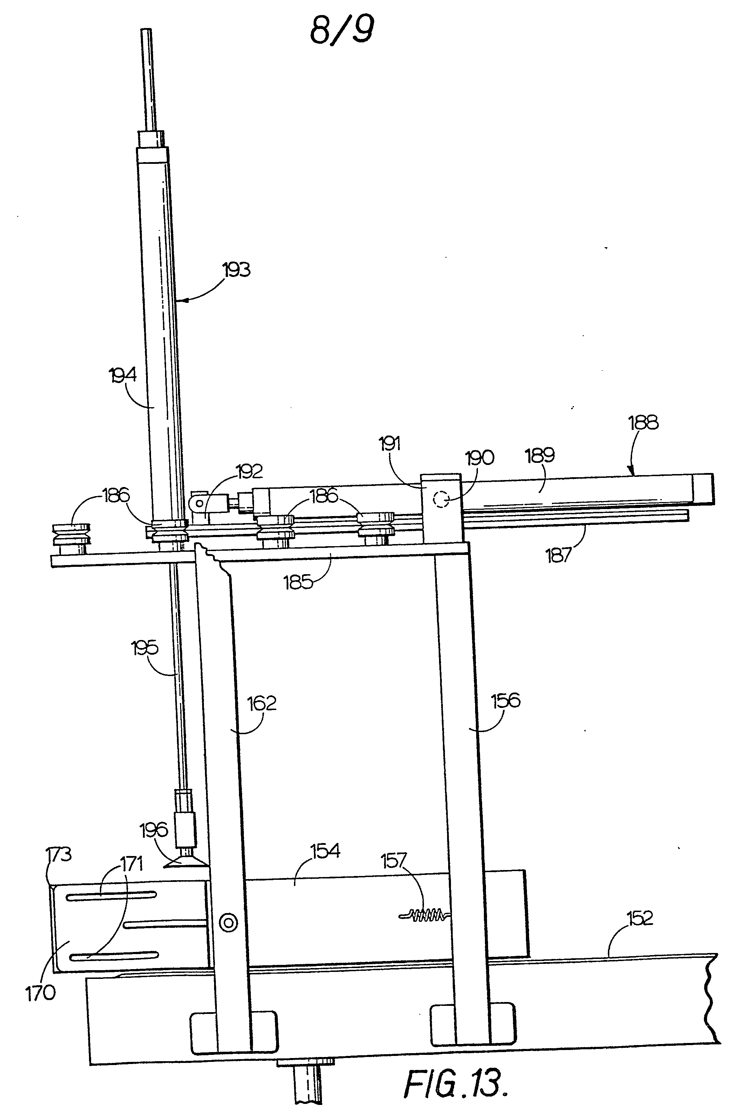

The unit 188 can be operated to move the pick-up head between a retracted position, illustrated in Figure 13, in which the pick-up head is vertically aligned with the point Y, and an extended position in which the pick-up head is disposed beyond the bracket 173. The unit 188 can be adjusted so that the extent of travel of the piston rod from the retracted postion, and thus the location of the extended position can be varied. The unit 193 can be operated between a retracted position, in which the vacuum cup 196 is raised to its uppermost position and a range of extended positions in which it is lower than that uppermost position. Both units operate at controlled speeds and may incorporate means ensuring gradual acceleration and deceleration at the ends of their strokes.

Operation of the units 188 and 193 can be effected under manual control and in an automatically repeating cycle. Each step in the cycle is initiated in response to completion of the preceding step. At the start of the cycle the units 188 and 193 are in their retracted positions and the electric motor is in operation so as to cause movement of the belt 152. An article of ware placed on the belt travels along the conveyor, is centred by the guides 154, engages the operating plate 175 and so causes operation of the proximity switch 174. The motor stops with the article of ware centred on the point Y at the pick-up station as described above. The unit 193 is then operated to lower the vacuum cup. The vacuum cup continues to move downwards until it engages the article at the point Y. The resultant increase in back-pressure in the air-supply to the cylinder 194 causes the supply to cease and a vacuum to be applied to the vacuum cup 196. The article of ware is thus held by the cup. The unit 193 is next moved towards its retracted position so that the article of ware is raised by the rising vacuum cup. On the unit 193 reaching its retracted position the unit 188 is moved towards its extended position, causing the article of ware to be carried beyond and clear of the bracket 173. When the unit 188 reaches its extended position the unit 193 is moved towards an extended position, lowering the article of ware onto a suitably positioned support (not shown). When the article reaches the support there is again an increase in

25

back-pressure in the air supply to the cylinder 194 which again causes the air-supply to cease. The vacuum applied to the vacuum cup 196 is released so that the article of ware is released. The unit 193 is returned to its retracted position and then the unit 188 is returned to its retracted position.

When the article of ware was raised from the conveyor, the operating plate 175 swung back to its inclined position, thereby reversing the operation of the proximity switch and allowing the motor to drive the belt again. In normal use other articles of ware would already have been placed on the conveyor so that the leading article of ware would in due course be centred by the guides 154, engage the operating plate 175 and re-start the cycle described above. Instead of single articles of ware, however, stacks of articles of ware may be placed on the conveyor belt, as indicated at 197 in Figure 14. In that case when the cycle starts, the uppermost article of the stack is removed but the proximity switch remains in its operated state so that a second cycle starts immediately the first cycle is completed. Further cycles occur without a break until no more articles from the stack remain. The belt then starts to move again and continues until the next article or stack of articles reaches the pick-up station.

It is also to be understood that the apparatus illustrated in Figures 1 to 9, and described above, can likewise be used to handle articles of ware stacked on the conveyor. As long as the switches 57 remain operated by articles of ware, the conveyor remains inoperative and the secondary motor 62 remains operative to effect a series of cycles of the pick-up head to remove the articles from the stack one by one.

Each of the pieces of apparatus illustrated in the drawings and described above may be used for a variety of purposes. The first apparatus is described above as being used for transferring ware from a conveyor to a decorating machine; the second apparatus could be used for the same purpose. Alternatively each machine may be used to transfer ware to machines for carrying out processes other than decorating. While the pick-up head may deposit articles on a support sufficiently accurately for some purposes, it may be necessary or desirable for articles deposited by the apparatus to be accurately centred or otherwise positioned before further treatment. Each machine may be used for transferring ware from one conveyor to another; it may for example be used to unstack articles from one conveyor and arrange them singly on a second conveyor, or to transfer single articles from one conveyor and stack them in stacks of a predetermined height on a second conveyor.

It will be understood from the foregoing description and the accompanying drawings that the invention enables there to be provided apparatus, for handling ceramic ware, that is efficient and reliable and that can operate unattended while it performs repeated cycles of operation.

## CLAIMS

1.  Automatic apparatus for handling ceramic ware, and of the kind comprising a conveyor having carrying means (17; 152) operative to carry ceramic ware (W, 20; 153, 182, 197) and drive means (26 to 29) operative to cause the carrying means to move the ware along the conveyor, characterised in that the apparatus also comprises guide means comprising a guide (36; 154) on each side of the path followed by ware moving along the conveyor and inclined relative to the path so that ware moved along the conveyor and engaging the guide means is constrained to move laterally of the conveyor so as to take up a predetermined position on the path and to be carried to a pick-up station (X; Y), detector means (57; 174, 175) responsive to the presence of ware at the pick-up station and operative to stop the drive means when ware is present at the pick-up station and to re-start the drive means when ware is not present at said station, pick-up means comprising a pick-up head (93; 196) operative to engage and release ware and shifting means (18; 188, 193) operative to raise and lower the pick-up head and to cause the pick-up head to traverse, and control means operative when ware is present at the pick-up station to cause the shifting means to lower the pick-up head from an initial position onto the ware, to cause the pick-up head to engage the ware, to cause the shifting means to raise the head with the ware traverse it away from the pick-up station and lower it, to cause the pick-up head to release the ware and to cause the shifting means to return the head to its initial position.

2.    Automatic apparatus according to claim 1 characterised in that the positions of the guides can be adjusted in unison to accommodate ware of different widths.

3.    Automatic apparatus according to either of claims 1 and 2 characterised in that the detector means comprises a first detector (57) associated with one guide and a second detector (57) associated with the other guide, each detector being operated when ware engages the associated guide, and the detector means operating to stop the drive means in response to the operation of both detectors but not to stop the drive means in response to the operation of one detector alone.

4.    Automatic apparatus according to either of claims 1 and 2 characterised in that the detector means comprises a detector (174) having a displaceable member (175) engaged by ware as it approaches the pick-up station, displacement of the member by the ware causing the operation of the detector which in turn causes the stopping of the drive means.

5.    Automatic apparatus according to claim 4 characterised in that there are provided stop means (179) operative to prevent ware being carried beyond the pick-up station by the conveyor, and adjustment means (171) to enable the position of the stop to be adjusted so that the apparatus can accommodate ware of different sizes.

6.    Automatic apparatus according to any one of the preceding claims characterised in that the shifting means comprises lift means (101, 102; 193) operative to raise and lower the pick-up head and traversing means (68; 188) operative to cause traversing movement of the lift means and thus of the pick-up head.

7. Automatic apparatus according to claim 6 characterised in that the lift means comprises a pneumatically operated piston-and-cylinder unit (101, 102; 193).

8. Automatic apparatus according to any one of the preceding claims characterised in that the pick-up head comprises an inverted resilient cup (93; 196) to the interior of which a vacuum can be applied.

1/9

FIG. I

120/60 AC

FIG. 9

FIG.2

FIG. 3

FIG. 4

FIG. 5

5/9

FIG. 6

00.17489

FIG. 7

FIG. 8

FIG.10.

FIG.11.

FIG.12.

FIG.13.

0017489

FIG.14.

0017489

# EUROPEAN SEARCH REPORT

**European Patent Office**

Application number

EP 80301068.5

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | DD – A – 120 151 (GERNLEIN) <br> + Page 3, left column, lines 5–9 + <br> –– <br> DE – A – 1 683 916 (NETZSCH) <br> + Page 3, lines 30–38; page 4, lines 1–17 + <br> –––– | 1,6,7 <br><br><br><br> 8 | B 65 G 47/91 <br><br><br><br><br><br> **TECHNICAL FIELDS SEARCHED (Int.Cl. 3)** <br><br> B 65 G 37/00 <br> B 65 G 47/00 <br> B 65 G 59/00 <br> B 65 G 61/00 <br> B 28 B 13/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search VIENNA | Date of completion of the search 30-06-1980 | Examiner KIENAST | |

EPO Form 1503.1  06.78